# EUROPEAN PATENT SPECIFICATION

(11) **EP 1 897 657 B1**
(45) Date of publication and mention of the grant of the patent: **15.06.2011**
(21) Application number: 07250180.2
(22) Date of filing: 17.01.2007
(51) Int. Cl.: B24C 3/32, B24C 7/00

(54) **Abrasive blasting apparatus with dosing auger in the carrier gas path**
Abrasivstrahlvorrichtung mit Dosierschnecke im Trägergasstrom
Appareil de sablage à vis doseuse dans le courant de gaz véhicule

(30) Priority: 07.09.2006 GB 0617650
(43) Date of publication of application: 12.03.2008
(60) Divisional application: 10182657.6
(73) Proprietor: Whirlwind Utilities Ltd., Wrexham Industrial Estate Wrexham LL13 9RD (GB)
(72) Inventor: Christopher, Richard Talbot, Wrexham LL 13 9UG (GB); Roscoe, Keith, Wrexham LL 13 9UG (GB)
(74) Representative: Whitfield, Gillian Janette

(56) References cited:
- EP-A1- 0 521 794
- EP-A2- 0 407 197
- EP-A2- 1 214 989
- GB-A- 1 090 181
- GB-A- 2 140 337
- US-A1- 2005 107 005

## Description

### Background to the invention

The present invention relates to a dispensing apparatus. In particular, the present invention relates to an apparatus for dispensing abrasive particulate material into a stream of gas in a pipe for the purpose of cleaning the internal pipe walls and a method of cleaning internal pipe walls using such an apparatus.

Tubercles form as a result of corrosion inside steel and cast water mains and consist of layers of corrosion products, such as rust and the like, which build up over time to form lumps and mounds over local areas of metal loss.

Tubercles can severely reduce the internal bore of pipes, leading to reduced flow and a necessary increase in pumping pressure to maintain a supply of water though the pipe.

Current methods of removal of tubercles involve the use of steel flails, rotated inside the pipe on rotating rods, impacting the pipe wall and chipping off the tubercle growth. This method uses large quantities of water to flush away loosened tubercle debris from inside the pipe and this dirty waste water is dumped to surface drains, which is clearly not environmentally desirable. In addition, the physical action of the steel flails impacting the pipe wall can dislodge the pipe at the pipe joints, thereby causing leaks in the pipeline supply.

There are several existing methods of cleaning pipes which use material such as sand or rocks blown through a pipe to act as scourers to dislodge tuberculation thereby clearing debris from the internal pipe wall. For example, GB2140337 discloses an apparatus for pipe renovation in which the mixture stream used in the cleaning process is subjected to pulsation in a predetermined cycle and at a predetermined pulsation rate. However, such methods are often unsuccessful and they fail to deliver the material into the pipe in a measured and controlled way to ensure that there is effective cleaning whilst minimising/preventing damage to the internal walls of the pipe from impaction by the aggregate material.

US2005/107005 discloses an apparatus for discharging a blasting media at a surface to be treated. The apparatus includes a pressurised conveyor in the form of a metering means, which may include a screw conveyor, to feed media into a supply conduit. The screw conveyor is oriented vertically and so there is gravitational influence on the metered delivery of blasting media into the conduit thus compromising the accuracy of the metering.

There is therefore a need for an effective and reliable method of delivery of aggregate material into a pipe in a controlled manner so as to minimise/prevent damage to the internal walls of the pipe whilst maximising the cleaning of debris from the interior surfaces of the pipe during the cleaning process.

An apparatus according to the preamble of claim 1 is described in document EP 0 407 197.

### Summary of the Invention

The present invention seeks to address the problems of the prior art.

Accordingly, a first aspect of the present invention provides a pipe cleaning apparatus according to claim 1.

The use of a screw conveyor has the advantage of allowing controlled and measured even delivery of the abrasive material into the stream of gas. The abrasive material is delivered from the hopper to the conveyor, for example by means of gravitational force and/or under pressure or by any other suitable means known to the skilled person, where the abrasive material fills the voids between the screw and conveyor housing before being moved through the conveyor housing on operation of the screw. In this way, there is a constant delivery of abrasive material into the stream of gas. The rate of delivery can be controlled by adjusting the speed of the screw and/or the volume of the voids between the screw and conveyor housing.

The hopper and the conveyor are pressurised to above a predetermined pressure which is the same as the pressure in the pipeline.

The particulate preferably conforms to one of more of the following conditions:
1. a hardness of greater than or equal to 6.5 on the Mohs scale;
2. falls within the following definitions as cited in BS EN 933 Part 5, Section 3, subsections 3.5 - totally crushed or broken particle, having more than 90 % of its surface crushed or broken (crushed or broken surfaces shall mean: facets of a particle of gravel produced by crushing or broken by natural forces and bound by sharp edges and optionally an angularity of > 90 %);
3. specific gravity of no less than 2.5 g/cm3 and possess a bulk density of between 1.3 and 1.6 g/cm3;
4. be of igneous origin;
5. graded to 10 mm, 20 mm and/or 30 mm; and
6. thoroughly washed and dried and all fines removed.

Whilst many particulate materials may be used, preferably the particulate material is one or more of flint, chert, granite or any other suitable aggregate known to the skilled person or any suitable man-made particulate material, such as cut pieces of steel or the like.

The particulate material is placed into the turbulent airflow and propelled to the opposite end of the pipe. The turbulent airflow is moving faster in the centre of the pipe that it is at the walls and therefore automatically hurls the particulate material at the interior surface of the pipe. The cleaning process is achieved when the combination of the speed of the turbulent air, the weight and the sharpness of the particulate material is sufficient to impinge on the crusty outer casing of the tubercles breaking this crust off and exposing the softer damp corroding layer underneath, which is easily removed by subsequently impinging particulate material.

The particulate material constantly impinges on the wall of the pipe during its travel through the pipe section and an uneven distribution results in loss of propulsion and blockages.

Therefore, for such a system to work properly, it is important that the particulate material is added to the airflow in an even and controlled a manner so as to provide an even distribution throughout the pipe. This is achieved by means of the screw conveyor, and in particular, a pressurised screw conveyor supplied with particulate material from a pressurised hopper, as discussed above. Screw conveyors provide the advantage of being able to distribute the particulate material evenly and allow the starting and stopping of distribution and delivery of the particulate material into the gas stream without creating blockages in the system.

In one embodiment, the conveyor is operable to feed particulate material into the gas stream at a rate of between 150 and 500 kg per hour. More preferably, the conveyor is operable to feed particulate material into the gas stream at a rate of between 200 and 400 kg per hour, and in particular at a rate of between 250 and 350 kg per hour.

A typical quantity of particulate material needed to clean a section of pipeline would be between 100 and 500 kg.

The amount of contamination in the pipeline has a greater influence on the quantity of aggregate used, rather than the length of the pipeline, as the aggregate works along the entire length of the pipeline with little or no degradation in the cleaning action.

The screw may be hydraulically powered. Alternatively, the screw may be mechanically driven or may be driven by any other suitable means known to the skilled person.

In one embodiment, the conveyor is operable to drive the screw in either a forward or an opposing reverse direction. This has the advantage that the direction of the screw can be reversed when desired to free any particulate material which may have become jammed within the apparatus prior to reaching the gas stream.

The apparatus comprises an air feed providing the stream of gas into which the particulate material is passed in use.

A further aspect of the present invention provides a method of cleaning pipes according to claim 6.

### Brief Description of the Drawings

An embodiment of the invention will now be described, by way of example only, and with reference to the accompanying drawings, in which:
Figure 1 is an illustration of a first embodiment of a dispensing apparatus in accordance with the present invention;
Figure 2 is an illustration of a cleaning system not representing a part of the invention
Figures 3A and 3B are further illustrations of part of the cleaning system of figure 2, showing a portion of the pipeline being cleaned.

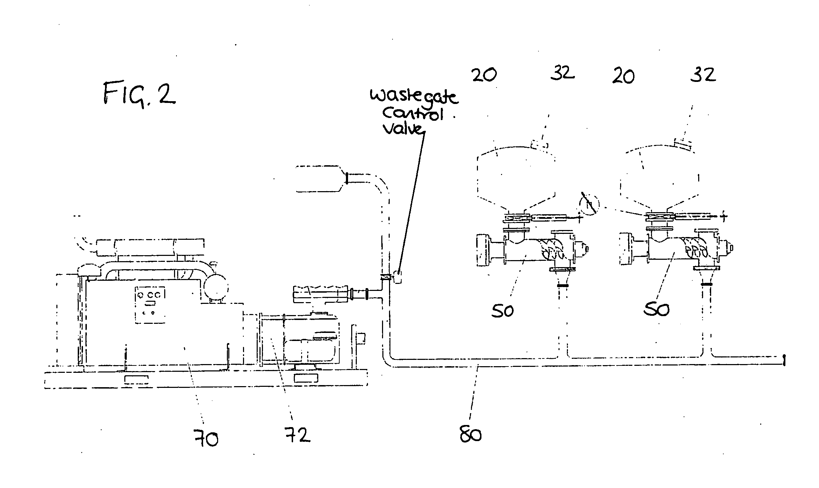

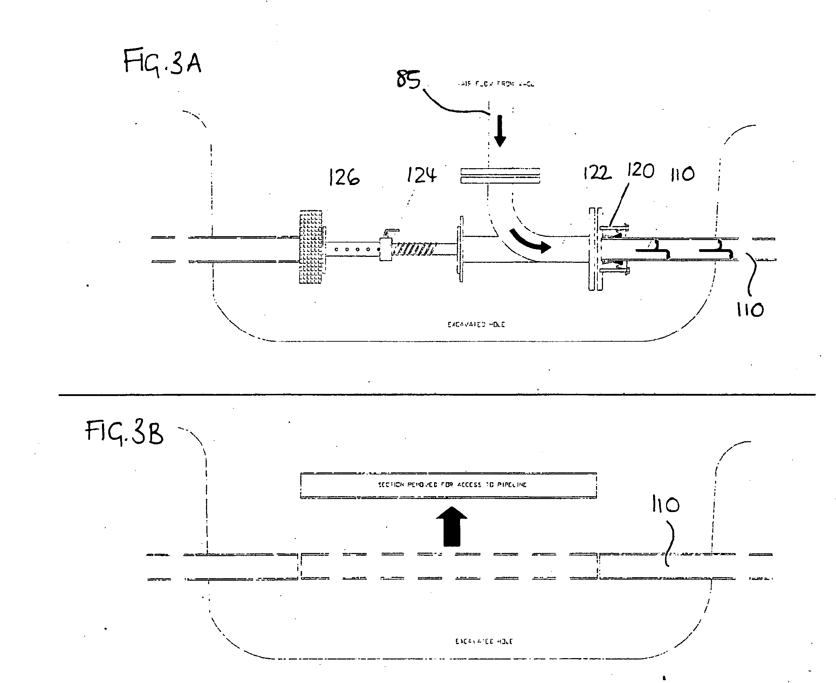

Figures 2 and 3 as well as the passages of the description relating thereto do not represent embodiments of the invention and are intended for illustrative purpose only.

### Detailed Description

Apparatus 10 comprises an aggregate hopper 20, having a housing 30 with an inlet 32 through which aggregate 40 may be fed into the hopper 20. Hopper 20 also has an outlet 34 which is engaged with a screw conveyor 50 comprising a housing 52 and a screw 54 located within housing 52 and arranged to convey aggregate along at least a portion of the length of housing 52 to exit 56 through which aggregate leaves the conveyor and enters a pressurised air stream travelling through the portion of pipe 60.

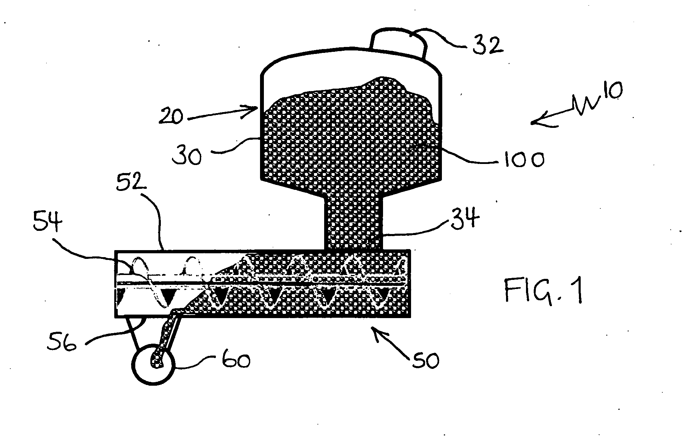

In use, aggregate 100 is fed into hopper 20 through inlet 32 in housing 30. The hopper 20 is pressurised and the aggregate is directed by gravity downwards towards screw conveyor 50 through connecting passage 36. On entering the conveyor, the aggregate fills up any void space around the screw 54 between the screw 54 and the walls 56 of conveyor housing 52. Aggregate 100 is then moved through housing 52 of conveyor 50 at a controlled rate so as to be delivered in a measured manner out of housing 52 of conveyor 50 and into a pressurised air stream (not shown in figure 1).

As can be seen in Figure 2, two hopper and conveyor arrangements may be used in the described embodiment to clean a section of pipe 60.

Two diesel engine units 70 are provided at a first end of the pipeline 110 to be cleaned, each diesel unit driving a separate helical blower 72. The helical blowers 72 can be operated individually or in parallel to product a turbulent air flow under pressure. Although the described embodiment employs two diesel engine units 70 each driving a separate helical blower 72, it is to be appreciated that one diesel engine unit 70 could be employed to drive more than one helical blower 72 or two or more diesel engine units 70 may be used to drive any desired number of helical blowers 72.

Outlet pipework 80 is connected to the blower outlet via a flanged, flexible stainless steel hose to remove vibration from the outlet pipework. Air from the blowers 72 is discharged into outlet pipework 80 via the hose.

The outlet pipework 80 is connected via flexible hose 85 to the pipeline 110 to be cleaned. The pipework 110 to be cleaned is fitted with a VJ coupling 120 attached to a ducksfoot bend 122. The VJ coupling 120 and bend 122 are strutted-off against the pipe opposite to prevent the coupling dislodging from the pipeline when under pressure using acrow strut 124 and wooden block 126. However, it will be appreciated that any suitable arrangement securing the coupling outlet pipework 80 and pipeline 110 may be used as an alternative to, or in combination with, the arrangement described.

The propulsion properties of air through the pipeline 110 in the embodiment described is as follows:

### Propulsion

High volume: achieving at least 60 m per second and preferably 90 m per second.

Low Pressure: Maximum 2.5 bar.

Quality: 100 % oil free

It has been found that if a high enough velocity is achieved within the pipeline 110 that turbulent airflow is achieved. This is produced by the drag effect of the internal wall of pipeline 110 slowing down the airflow adjacent to the wall. The greater the velocity of the airflow, the larger the differential in flow between that at the centre of pipeline 110 and at the wall of pipeline 110, and thus the greater the turbulence of the airflow in pipeline 110.

The turbulence can be maintained around bends so as not to limit the use of the system to straight pipelines only. Where T-pieces arc installed in the pipeline 110 the flow turns slightly more laminar as there is no wall to slow the air and create turbulence therefore allowing the aggregate to continue along the pipe and not to enter the off-take of the T-piece.

The size of the blowers 72 is selected so as to allow the generation of sufficient flows to enable a constant and controlled flow rate to be maintained throughout the whole system, thereby eliminating any requirement to store energy and release it in bursts or the need to generate greater pressures to provide the required quantity of air through the pipeline 110.

The pressure generated by the blowers 72 is controlled by the use of a suitable pressure control device which controls a waste gate arrangement in the main discharge line from the pipeline 110, thus allowing the operator to control the amount of pressure in the system and enabling the apparatus of the system to achieve:
1. a low pressure i.e. <0.5 bar, for bulk water removal, thus maintaining essential control and ensuring a safe working environment during the operation of the apparatus; and
2. a greater pressure of 2.5 bars when required for cleaning purposes.

The blowers 72 produce hot air at around 150°C this is a result of both the mechanical operation of the diesel engine units 70 and the heat energy converted during pressurisation of the air. This heat is used during the operation to dry the inside wall of the pipeline 110. In drying the wall and its contamination, the contaminates, i.e. tubercles, dry out and become brittle enabling easier removal.

The present invention is capable of successfully cleaning heavily contaminated pipes of between 80 mm and 150 mm diameter and up to 1000 meters in length, although it will be appreciated that longer lengths and greater diameter pipes may be cleaned using the present invention. Further, the process may be adapted to accommodate any size of pipe by appropriate selection of equipment to achieve the desired air pressures etc. It is preferably that the apparatus carrying out the cleaning operation is easily portable to allow ease of transportation of the apparatus to different sites where pipelines require cleaning. However, where the scale of the operation demands that the equipment used is too large to be easily portable, it will be appreciated that the apparatus may be assembled onsite, used to clean the pipeline, and then disassembled and transported to a fresh site before being reassembled for use.

## Claims

1. A pipe cleaning apparatus (10) for attachment to a pipe to be cleaned, and operable to dispense abrasive particulate material into a stream of gas within such a pipe to be cleaned, the apparatus (10) comprising:
a. a pressurised hopper (20) for receiving particulate abrasive material;
b. a pressurised conveyor (50) coupled to the hopper (20) and comprising a housing (52) having an inlet (34) for receiving particulate material from the hopper (20) in a first direction, an outlet (56) for delivery of particulate material from the housing (52) direction substantially parallel to first direction, and a screw (54) located within the housing (52) and operable to transport particulate material from the inlet (34) to the outlet (56) in a second direction substantially transverse to the first direction; **characterised by,** the outlet (56) being adapted for attachment to a pipe to be cleaned, and adapted for delivery of particulate material into a stream of gas in such a pipe to be cleaned; and
d. an air feed operable to provide a stream of gas into a pipe to be cleaned the stream of gas travelling at a velocity sufficient to achieve turbulent flow, into which the particulate material is delivered in use.

2. Apparatus (10) in accordance with Claim 1, wherein the hopper (20) and the conveyor (50) are pressurised to a predetermined pressure.

3. Apparatus (10) in accordance with any preceding Claim, wherein the conveyor (50) is operable to feed particulate into the gas stream at a rate between 200 and 400 kg per hour.

4. Apparatus (10) in accordance with any preceding Claim, wherein the screw (54) is hydraulically powered.

5. Apparatus (10) in accordance with any preceding Claim, wherein the conveyor (50) is operable to drive the screw (54) in either a forward or an opposing reverse direction.

6. A method of cleaning pipes, said method comprising the steps of:
a. providing a stream of gas within a pipe (110) to be cleaned, the stream of gas having sufficient velocity to achieve turbulent airflow;
b. providing an apparatus (10) in accordance with any one of Claims 1 to 5 in communication with the stream of gas; providing abrasive particulate material into the hopper (20); and
c. pressurising the hopper (20) and the conveyor (50); and
d. operating the conveyor (50) so as to rotate the screw (54) and move the particulate material through the conveyor (54) and into the stream of gas.

## Patentansprüche

1. Rohrreinigungsvorrichtung (10) für den Anschluss an ein zu reinigendes Rohr zu dem Zweck, schleifendes Partikelmaterial in einen Gasstrom in dem zu reinigenden Rohr zu dispensieren, wobei die Vorrichtung (10) besteht aus
(a) einem unter Druck gesetzten Trichter (20) zur Aufnahme des schleifenden Partikelmaterials;
(b) einem unter Druck gesetzten Förderer (50), der an den Trichter (20) angekoppelt ist und ein Gehäuse (52) enthält mit einem Einlass (34) für die Aufnahme des schleifenden Partikelmaterials aus dem Trichter (20) in einer ersten Richtung, einem Auslass (56) für die Beschickung des schleifenden Partikelmaterials vom Gehäuse (52), und einer im Gehäuse (52) angebrachten Schnecke (54), die das schleifende Partikelmaterial vom Einlass (34) zum Auslass (56) in einer zweiten Richtung befördern kann, **dadurch gekennzeichnet, dass** der Auslass (56) für den Anschluss an ein zu reinigendes Rohr sowie dazu ausgelegt ist, das schleifende Partikelmaterial in einen Gasstrom in dem zu reinigenden Rohr zu befördern; und
(c) einem Luftstrom, der einen Gasstrom in ein zu reinigendes Rohr mit einer Geschwindigkeit befördert, die ausreicht, um eine turbulente Strömung zu erzeugen, in welche das Partikelmaterial bei Betrieb gefördert wird.

2. Vorrichtung (10) gemäß Anspruch 1, **dadurch gekennzeichnet, dass** der Trichter (20) und der Förderer (50) unter einen vorgegebenen Druck gesetzt werden.

3. Vorrichtung (10) gemäß einem der vorhergehenden Ansprüche, **dadurch gekennzeichnet, dass** der Förderer (50) so betrieben werden kann, dass Partikulat in einer Menge von 200 bis 400 kg pro Stunde in den Gasstrom gefördert wird.

4. Vorrichtung (10) gemäß einem der vorhergehenden Ansprüche, **dadurch gekennzeichnet, dass** die Schnecke (54) hydraulisch angetrieben wird.

5. Vorrichtung (10) gemäß einem der vorhergehenden Ansprüche, **dadurch gekennzeichnet, dass** der Förderer (50) so betrieben werden kann, dass er die Schnecke (54) entweder vorwärts oder in einer entgegengesetzten Richtung rückwärts antreibt.

6. Rohrreinigungsverfahren bestehend aus folgenden Schritten:
(a) Erzeugung eines Gasstroms innerhalb eines zu reinigenden Rohrs (110), wobei die Geschwindigkeit des Gasstroms ausreicht, um eine turbulente Luftströmung zu erzeugen;
(b) Erstellung einer Vorrichtung (10) gemäß einem der Ansprüche 1 bis 5 in Kommunikation mit dem Gasstrom; Beförderung von schleifendem Partikelmaterial in den Trichter (20);
(c) Unterdrucksetzung des Trichters (20) und des Förderers (50;
(d) Betrieb des Förderers (50) zur Rotation der Schnecke (54) und Beförderung des Partikelmaterials durch den Förderer (50) und in den Gasstrom.

## Revendications

1. Appareil de nettoyage de tuyaux (10) destiné à être fixé à un tuyau devant être nettoyé et pouvant fonctionner pour distribuer un matériau particulaire abrasif dans un flux de gaz à l'intérieur d'un tel tuyau devant être nettoyé, l'appareil (10) comprenant :
a. une trémie mise sous pression (20) destinée à recevoir le matériau particulaire abrasif ;
b. un système de transport mis sous pression (50) relié à la trémie (20) et comprenant un boîtier (52) comportant une entrée (34) destinée à recevoir le matériau particulaire depuis la trémie (20) dans une première direction, une sortie (56) destinée à la délivrance du matériau particulaire depuis le boîtier (52) dans une direction sensiblement parallèle à la première direction et une vis (54) située à l'intérieur du boîtier (52) et pouvant fonctionner pour transporter le matériau particulaire de l'entrée (34) vers la sortie (56) dans une deuxième direction sensiblement transversale à la première direction ; **caractérisé par**
c. la sortie (56) qui est conçue pour être fixée à un tuyau devant être nettoyé et conçue pour une délivrance du matériau particulaire dans un flux de gaz dans un tel tuyau devant être nettoyé ; et
d. une prise d'air pouvant fonctionner pour fournir un flux de gaz dans un tuyau devant être nettoyé, le flux de gaz se déplaçant à une vitesse suffisante pour obtenir un écoulement turbulent, où le matériau particulaire est délivré pour être utilisé.

2. Appareil (10) selon la revendication 1, dans lequel la trémie (20) et le système de transport (50) sont mis sous pression à une pression prédéterminée.

3. Appareil (10) selon l'une quelconque des revendications précédentes, dans lequel le système de transport (50) peut fonctionner pour amener des particules dans le flux de gaz à un débit entre 200 et 400 kg par heure.

4. Appareil (10) selon l'une quelconque des revendications précédentes, dans lequel la vis (54) est alimentée hydrauliquement.

5. Appareil (10) selon l'une quelconque des revendications précédentes, dans lequel le système de transport (50) peut fonctionner pour entraîner la vis (54) soit dans une direction vers l'avant, soit dans une direction vers l'arrière opposée.

6. Procédé de nettoyage de tuyaux, ledit procédé comprenant les étapes consistant à :
a. fournir un flux de gaz à l'intérieur d'un tuyau (110) devant être nettoyé, le flux de gaz présentant une vitesse suffisante pour obtenir un écoulement d'air turbulent ;
b. fournir un appareil (10) selon l'une quelconque des revendications 1 à 5 pour une communication avec le flux de gaz ;
fournir un matériau particulaire abrasif dans la trémie (20) ; et
c. mettre sous pression la trémie (20) et le système de transport (50) ; et
d. faire fonctionner le système de transport (50) de façon à entraîner en rotation la vis (54) et à déplacer le matériau particulaire par l'intermédiaire du système de transport (50) et dans le flux de gaz.
